# EUROPÄISCHE PATENTANMELDUNG

(11) **EP 0 898 873 A1**
(43) Veröffentlichungstag der Anmeldung: **03.03.1999**
(21) Anmeldenummer: 98115774.6
(22) Anmeldetag: 21.08.1998
(51) Int. Cl.: A01D 45/00

(54) **Verfahren und Vorrichtung zum kurzzeitigen Entfernen einer länglichen Folie für Erntezwecke in der Landwirtschaft**

(30) Priorität: 22.08.1997 DE 19736550
(71) Anmelder: Höhnen, Alfred, 79211 Denzlingen (DE)
(72) Erfinder: Höhnen, Alfred, 79211 Denzlingen (DE)
(74) Vertreter: Goy, Wolfgang, Dipl.-Phys.

(57) **Zusammenfassung**

In oder auf dem Boden 2 wachsende landwirtschaftliche Produkte werden für verbesserte Wachstumsbedingungen von Folien 3 abgedeckt. Für die Ernte muß die Folie 3 kurzzeitig entfernt werden. Die Erfindung sieht vor, daß die Folie 3 in der Art eines Daches 11 vom Boden 2 nach oben abgehoben wird, so daß sich darunter eine Person zum Ernten aufhalten kann. Zum Hochheben der Folie 3 dient ein Geste 8, welches sich unter der Folie 3 befindet, so daß die Folie 3 mit der Fortbewegung des Gestells 8 in der Art einer Welle angehoben und wieder abgesenkt wird.

## Beschreibung

Die Erfindung betrifft ein Verfahren zum kurzzeitigen Entfernen einer länglichen Folie für Erntezwecke in der Landwirtschaft, wobei die Folie zum Abdecken von in oder auf dem Boden wachsenden landwirtschaftlichen Produkten für verbesserte Wachstumsbedingungen verwendet wird. - Die Erfindung betrifft ferner eine Vorrichtung zur Durchführung des Verfahrens. - Schließlich betrifft die Erfindung noch eine Folie zur Durchführung des Verfahrens.

In der Landwirtschaft ist es bei einem Teil des Gemüses möglich, zur Verbesserung der Wachstumsbedingungen dieses Gemüse mit einer Folie abzudecken. Unter der Folie bildet sich ein verändertes Klima, welches sich positiv auf die Wachstumsbedingungen des Gemüses auswirkt. Ein Beispiel und ein besonderes Anwendungsgebiet der Erfindung ist der Spargelanbau. Indem die Spargelhügel mittels einer Folie abgedeckt werden, ist eine Ernte des Spargels zwei Mal pro Tag möglich, während ohne Abdeckfolie nur eine einzige Ernte pro Tag möglich ist.

Die streifenförmige, längliche Folie wird zu Beginn der Wachstumszeit auf die Felder aufgebracht, so daß das Feld durch eine Vielzahl von zueinander parallelen Folien abgedeckt ist. Das Problem beim Aufbringen der Folien besteht darin, daß die Folien gesichert werden müssen, daß sie der Wind nicht wegweht. Zu diesem Zweck ist es üblich, die Folien an der einen Längsseite mit Erde abzudecken bzw. die Folie dort im Boden einzugraben. Dies ist eine sehr zeit- und kräfteaufwendige Arbeit. Die andere Seite wird dann mit Sandsäcken beschwert. Ein weiteres Problem besteht dann darin, daß zum Ernten der landwirtschaftlichen Produkte die Folie kurzzeitig entfernt und anschließend wieder zurückgelegt werden muß. Dies ist umständlich, arbeitsintensiv sowie zeitaufwendig. So werden durch entsprechenden Einsatz von Personen zunächst die als Beschwerung dienenden Sandsäcke entfernt und die Folien seitlich weggezogen. Anschließend wiederholt sich die gesamte Prozedur in umgekehrter Reihenfolge.

Davon ausgehend liegt der Erfindung die **Aufgabe** zugrunde, ein einfacheres Verfahren zum kurzzeitigen Entfernen einer länglichen Folie für Erntezwecke in der Landwirtschaft zu schaffen; außerdem soll eine Vorrichtung sowie eine Folie zur Durchführung des Verfahrens geschaffen werden.

Als technische **Lösung** wird mit der Erfindung *verfahrensmäßig* vorgeschlagen, daß die Folie derart in der Art eines Daches vom Boden nach oben angehoben wird, daß sich darunter eine Person zum Ernten aufhalten kann.

Die Grundidee des erfindungsgemäßen Verfahrens zum kurzzeitigen Entfernen einer länglichen Folie für Erntezwecke in der Landwirtschaft besteht darin, die Folie nicht mehr wie bisher seitlich wegzuziehen, sondern sie vielmehr derart nach oben zu befördern, daß darunter genügend Platz für die Erntepersonen ist. Dieses Anheben der Folie läßt sich ohne weiteres maschinell bewerkstelligen, so daß der Personen- sowie Krafteinsatz auf ein Minimum reduziert ist. Dadurch lassen sich auch die Personalkosten für die Ernte deutlich reduzieren. Nachdem der Erntevorgang durchgeführt worden ist, wird die senkrecht nach oben angehobene Folie wieder nach unten gelassen.

Eine Weiterbildung des erfindungsgemäßen Verfahrens schlägt vor, daß die Folie längs eines Teilabschnittes der Gesamtlänge der Folie angehoben wird. Gemäß dieser Weiterbildung ist es nicht erforderlich, die gesamte Folie über ihre gesamte Länge anzuheben, sondern nur in dem Bereich, in dem gerade geerntet wird. Die bereits abgeernteten Bereiche sowie die noch zu erntenden Bereiche bleiben mit der Folie abgedeckt.

Eine bevorzugte Weiterbildung hiervon schlägt vor, daß die Folie in der Art einer Welle vom einen Ende der Folie zum anderen Ende hin sukzessive angehoben und anschließend wieder herabgelassen wird. Diese "Folienwelle" bewegt sich somit gemäß dem Erntefortschritt weiter. Die Fortbewegung der Welle kann dabei kontinuierlich oder aber diskontinuierlich erfolgen.

Als technische **Lösung** wird mit der Erfindung *vorrichtungsmäßig* zur Durchführung des Verfahrens ein Gestell vorgeschlagen, welches sich unter der Folie befindet und mittels welchem die Folie anhebbar ist.

Die Grundidee besteht darin, daß unterhalb der Folie ein Gestell greift, welches die Folie in der Art eines Daches vom Boden anhebt. Dieses Gestell bewegt sich längs der Folie, indem gewissermaßen das Gestell unter der Folie in Längsrichtung hindurchfährt und somit die Folie über das Gestell läuft. Zur Verbesserung des Anhebvorganges vor dem Gestell und Absenkvorganges hinter dem Gestell kann das Gestell oberseitig bewegliche, gedämpfte Stoßfänger aufweisen.

Eine Weiterbildung hiervon schlägt vor, daß das Gestell ein selbst angetriebenes Fahrzeug ist, welches unter der Folie hindurch in deren Längsrichtung fährt. Bei dem Fahrzeug wird es sich um einen Kleintraktor handeln, welcher nur so breit wie die Folie zu sein braucht. Über dem Dach des Traktors verläuft dann die Folie. Dabei wird der Traktor nach vorne und/oder nach hinten hin ein zusätzliches Gestell aufweisen, welches ein genügend langes Abhebdach für die Folie definiert.

Alternativ zum selbst angetriebenen Fahrzeug wird vorgeschlagen, daß das Gestell ein durch eine Seilwinde oder durch einen Traktor gezogenes Fahrzeug ist, welches unter der Folie hindurch in deren Längsrichtung fährt. Dies bedeutet, daß zwar das Fahrzeug sich ebenfalls direkt unterhalb der Folie befindet, daß aber der Fahrzeugantrieb durch eine separate Seilwinde oder durch einen Schmalspurtraktor geschaffen ist. Die Seilwinde befindet sich am Ende der Folienbahn. Durch Betätigen dieser Seilwinde wird das Fahrzeug sukzessive vorwärtsbewegt. Bei der Verwendung eines Schmalspurtraktors befindet sich das Gestell-Fahrzeug gewissermaßen in dessen Schlepp.

Eine bevorzugte Weiterbildung dieses Prinzips des Gestell-Fahrzeugs schlägt vor, daß mehrere Gestell-Fahrzeuge zu einer mehrspurigen Einheit miteinander verbunden sind, wobei diese Einheit als solche insgesamt gezogen wird. Dadurch kann ein mehrspuriges, insbesondere 2- oder 4-spuriges System zum Hochheben einer entsprechenden Anzahl von Folien geschaffen werden. Vorzugsweise wird ein Schmalspurtraktor verwendet, welcher zwischen zwei Spargeldämmen fährt. Dieser Schmalspurtrecker zieht dann die aus einer Mehrzahl von Gestell-Fahrzeugen gebildete Einheit, welche nebeneinander angeordnet und entsprechend untereinander verbunden sind. Vorzugsweise sind dabei die Gestell-Fahrzeuge seitlich zum Anpassen der Spurweite an die örtlichen Gegebenheiten mit ihren Rädern verstellbar.

Eine weitere Weiterbildung schlägt vor, daß der Traktor eine Einrichtung zum Anheben des Gestells bzw. der Einheit aus mehreren Gestell-Fahrzeugen aufweist. Bei dieser Variante kann beispielsweise die Traktorhydraulik zum Anheben des Gestells bzw. der Einheit verwendet werden. Der Vorteil besteht darin, daß dadurch ein kleinerer Wendekreis erreicht wird.

Eine dritte Alternative schlägt schließlich vor, daß das Geste seitlich auskragend an einem selbst angetriebenen Fahrzeug angeordnet ist. Bei dem Fahrzeug wird es sich ebenfalls um einen Schmalspurtraktor handeln. Das Gestell kann dabei an der hydraulischen Ackerschiene befestigt sein. Das Fahrzeug fährt dabei seitlich längs der Folie. Das seitlich auskragende Gestell greift dann unterhalb der Folie. Eine Weiterbildung hiervon schlägt vor, daß auf beiden Seiten des Fahrzeugs jeweils ein Gestell angeordnet ist. Dies bedeutet, daß der Traktor zwischen zwei Folienbahnen fährt und links und rechts jeweils die Folie angehoben wird. Das Gestell kann frei schwebend seitlich am Fahrzeug angeordnet sein. Dies hat den Vorteil, daß der gesamte Platz unterhalb der angehobenen Folie bzw. des angehobenen Gestells für die Erntepersonen genutzt werden kann. Um die auf das Gestell wirkenden Kräfte der darüber befindlichen Folie besser aufnehmen zu können, fährt das Gestell vorzugsweise auf Rädern. Dabei sind die Federbeine vorzugsweise stoßgedämpft. Als Reifen sind vorzugsweise Ballonreifen vorgesehen.

Eine weitere Weiterbildung des Gestells schlägt vor, daß es an seiner Oberseite hintereinander wenigstens zwei, quer zur Längsrichtung sich erstreckende Zylinderrollen aufweist. Durch diese Zylinderrollen ist gewährleistet, daß die Folie auf diesen Führungselementen eben aufliegt und somit eben vom Boden abgehoben wird. Äquivalent zu den Zylinderrollen sind sämtliche Rollenanordnungen und Rollentypen denkbar, welche als verbindende Mantelfläche einen Zylindermantel definieren. Es muß durch die Rollen immer gewährleistet sein, daß die Folie in der Art einer Ebene aufliegt.

Eine Weiterbildung hiervon schlägt vor, daß die vorderste sowie die hinterste Zylinderrolle vom Gestell weg nach unten verschwenkbar sind. In diesem Fall sind wenigstens drei Zylindertollen vorzusehen, nämlich eine zentrale, fest angeordnete Zylinderrolle in der Mitte sowie hinten und vorne jeweils die beweglichen Zylinderrollen. Vorzugsweise sind aber in der Mitte zwei oder drei fest angeordnete Zylinderrollen vorgesehen.

Vorzugsweise weisen die Zylinderrollen über die Länge verteilt Ringe oder eine hälftig entgegengesetzt wendelförmig aufgewickelte Schnur aus einem elastischen Material, insbesondere Gummi auf. Durch die Gummiringe wird ein besseres Abrollen der Folie erreicht. Ein Gleiten zwischen Folie und Rollenkörper wird dadurch vermieden, da das Ring- bzw. Schnur-Material einen relativ hohen Reibungskoeffizienten aufweist und somit die Folie nicht über die Zylinderrollen hinwegrutscht. Die Gummiringe bilden dabei einen Zwischenraum, in dem an der Folie anhaftende Steinchen oder Erdpartikel hindurchlaufen können, ohne an der Folie Schaden anzurichten. Alternativ zu den Gummiringen kann auch eine Gummischnur verwendet werden. Diese ist auf der einen Hälfte der Zylinderrolle in eine vorgegebene Richtung wendelförmig gewickelt und auf der anderen Hälfte ebenfalls wendelförmig gewickelt, jedoch in die entgegengesetzte Richtung. Durch die so vorgegebene Wickelrichtung wird die überrollende Folie nach außen gefördert und gestreckt. Dadurch wird ein besseres Ablegen der Folie auf dem Spargeldamm erreicht. Allerdings muß die Rolle bzw. das Gestell-Fahrzeug immer in der gleichen Richtung betrieben werden.

Die Zylinderrollen können auch aus mehreren Einzel-Zylinderrollen bestehen, welche geradlinig oder gewölbt verlaufen. Bei der Variante mit der Wölbung wird durch die Rollen eine Art gewölbtes Dach definiert.

Eine weitere Weiterbildung des Gestells schlägt schließlich vor, daß für das Gestell eine am Gestell anbringbare Zusatzeinrichtung zur Aufnahme einer Folienrolle vorgesehen ist. Die Grundproblematik ist folgende: Zunächst muß die Folie überhaupt auf das Feld aufgebracht werden. Dies kann von Hand durchgeführt werden, indem beispielsweise die Folienrolle längs des zu bedeckenden Feldes abgerollt wird. Die Weiterbildung der Erfindung schlägt jedoch vor, daß zum Abrollen der Folienrolle das Gestell verwendet wird, und zwar wird zu diesem Zweck am Gestell eine Zusatzeinrichtung angebracht, welche die Folienrolle trägt. Indem dann das Gestell vorwärts bewegt wird, wird entsprechend die Folie abgerollt. Da dieser Vorgang motorbetrieben durchgeführt wird, ist hierfür kein menschlicher Kraftaufwand notwendig.

Schließlich wird als technische **Lösung** eine Folie zur Durchführung des Verfahrens vorgeschlagen, welche an den beiden Längsrändern einen Schlauch für eine Wasserbefüllung als Folienbeschwerung aufweist.

Die Grundidee dieser Ausbildung der Folie besteht darin, nicht mehr wie bisher zum Beschweren der Folie Sandsäcke oder dgl. zu verwenden, sondern die Folie vielmehr an den beiden zueinander parallelen Längsrändern mit einem Schlauch zu versehen. Diese Schläuche können mit Wasser gefüllt werden und sind somit schwer genug, daß sich die Folie nicht bei Wind abheben kann. Die beiden Schläuche weisen dabei am einen Ende einen verschließbaren Einfüllstutzen mit einem Anschluß für einen Wasserschlauch auf. Am anderen Ende ist ein zweiter Stutzen, insbesondere ein Auslaßventil für die entweichende Luft vorgesehen. Durch eine entsprechend dosierte Wasserbefüllung ist es nicht notwendig, beim erfindungsgemäßen Anheben der Folie das Wasser zuvor abzulassen. Vielmehr kann das Wasser über die gesamte Erntesaison hinweg in den Schläuchen belassen werden. Nach dem Ablassen des Wassers nach Ende der Erntesaison kann die Folie wieder aufgerollt werden.

Vorzugsweise ist der Schlauch in einem Wulst der Folie angeordnet. Es handelt sich dabei um einen relativ dünnwandigen Schlauch aus einem festen, aber dehnbaren Material, welcher in den Wulst eingezogen bzw. bei der Schweißung des Wulstes eingelegt wird. Die Schlauchdehnung kann 10 bis 20% betragen. Der Durchmesser ist so zu wählen, daß die notwendige Schwere mit der Wasserbefüllung erreicht wird und daß weiterhin ein Anschluß an handelsübliche Wasserzurührungsvorrichtungen möglich ist. Weiterhin ist der Schlauch vorzugsweise zusammenfaltbar, so daß er aufgehaspelt werden kann.

Schließlich wird in einer Weiterbildung der Folie vorgeschlagen, daß die Schläuche mehrerer Folien zu einem Schlauchsystem miteinander verbindbar sind. Auf diese Weise ist es möglich, durch einen einzigen Befüllvorgang mehrere Folien gleichzeitig mit Wasser zu befüllen.

Die so ausgebildete Folie mit den seitlichen Schläuchen für eine Wasserbefüllung stellt eine eigenständige Erfindung dar, unabhängig von dem erfindungsgemäßen Anheben der Folie für den Erntevorgang.

Ausführungsbeispiele zum kurzzeitigen Entfernen einer länglichen Folie für Erntezwecke in der Landwirtschaft werden nachfolgend anhand der Zeichnungen beschrieben. In diesen zeigt:
- Fig. 1: eine Ansicht eines Spargelhügels von der Seite, wobei die Abdeckfolie bereichsweise abgehoben ist;
- Fig. 2: eine Ansicht von vorne auf nebeneinander liegende Spargelhügel;
- Fig. 3: eine perspektivische Ansicht eines fahrzeugartigen Gestells zum Anheben der Folie;
- Fig. 4: eine perspektivische Ansicht der Abdeckfolie;
- Fig. 5: eine weiterentwickelte Variante des fahrzeugartigen Gestells in einer schematischen Seitenansicht;
- Fig. 6 a und 6 b: zwei Ausführungsformen von Zylinderrollen für die Gestelle;
- Fig. 7 a bis 7 d: verschiedene Anordnungen der Zylinderrollen aus Einzel-Zylinderrollen;
- Fig. 8: ein System von mehreren Fahrzeug-Gestellen in einer 4-spurigen Anwendung;
- Fig. 9: eine schematische Darstellung des Systems von Folien mit Schläuchen für die Wassereinleitung.

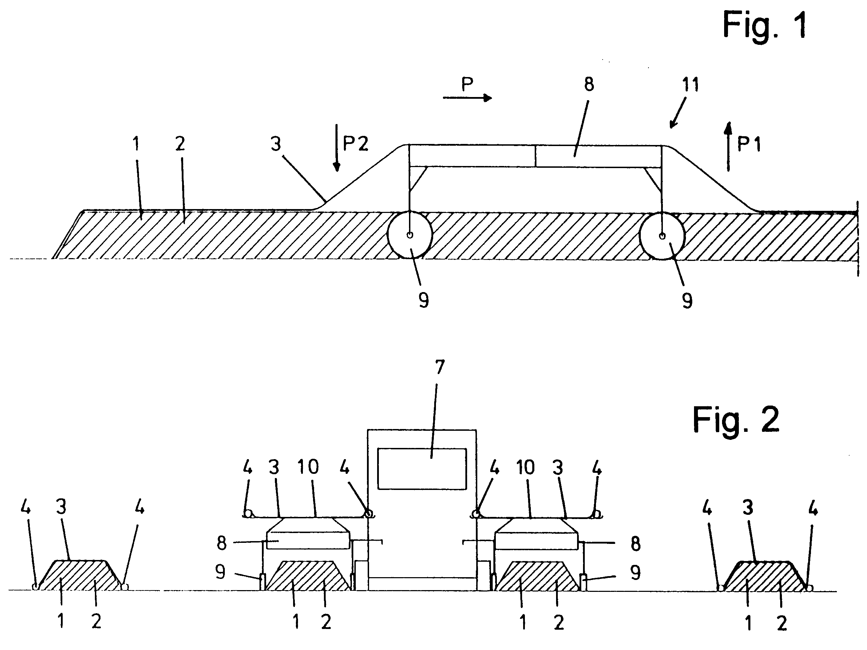

In den Fig. 1 und 2 sind schraffiert Spargelhügel 1 angedeutet. Im Boden 2 dieser Spargelhügel 1 wächst der Spargel.

Die Spargelhügel 1 sind jeweils durch eine längliche, schmale Folie 3 abgedeckt, welche beispielsweise eine Stärke von 0,5 mm haben kann. Das Besondere an dieser Folie 3 ist, daß sie an den beiden Längsrändern jeweils einen schlauchförmigen Wulst 4 von beispielsweise 5 cm Durchmesser aufweist. Das eine Ende des Wulstes 4 weist einen verschließbaren Einfüllstutzen 5 mit Anschluß für einen Wasserschlauch auf, während das andere Ende ein Auslaßventil 6 zum Entweichen der Luft beim Befüllen des Wulstes 4 mit Wasser aufweist. Die so ausgebildete Folie 3 kann eine Länge zwischen 50 und 150 m aufweisen. Die Folie 3 ist auf einer Rolle/Walze aufgerollt. Zu Beginn der Spargelzeit nach dem Herrichten des Ackers wird die aufgerollte Folie 3 so abgerollt, daß sie den Spargelhügel 1 abdeckt. In dem dargestellten Ausführungsbeispiel in Fig. 2 reichen die beiden Wulste 4 der Folie 3 bis hinunter auf die Basis des Spargelhügels 1. Es ist aber auch denkbar, daß die Wulste 4 nicht ganz bis zu dieser Basis reichen. Damit die Folie 3 durch den Wind nicht abgehoben wird, werden die beiden seitlichen Wüste 4 mit Wasser zur Beschwerung gefüllt.

Zum Ernten des Spargels muß die Folie 3 jeweils von dem Spargelhügel 1 kurzzeitig entfernt werden. Zu diesem Zweck dient hierfür eine automatische Einrichtung.

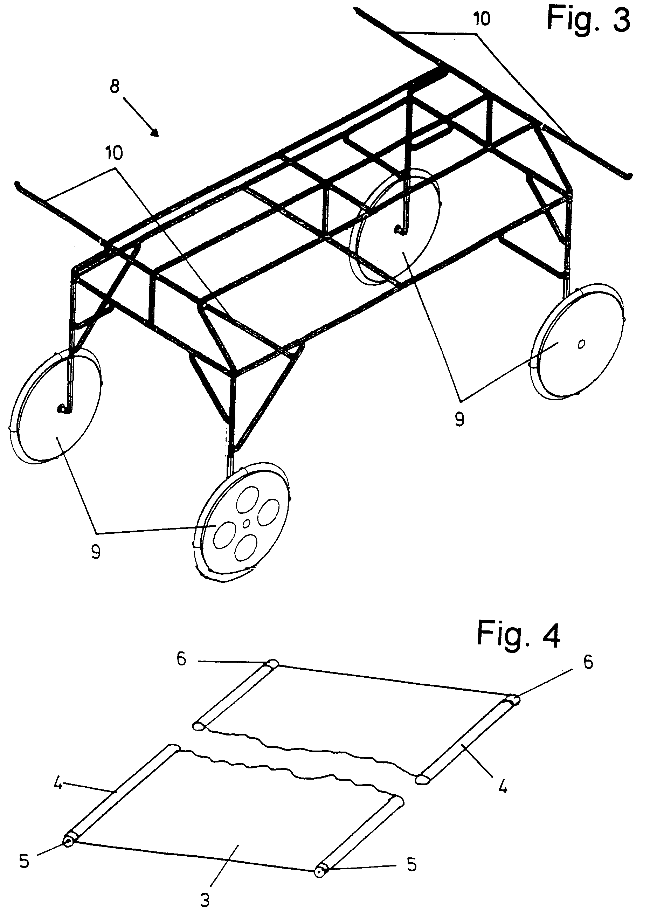

In Fig. 2 ist erkennbar, daß sich zwischen zwei Spargelhügeln 1 ein Fahrzeug 7 in Form eines Traktors befindet, welcher zwischen diesen Spargelhügeln 1 entlang fährt. Links und rechts am Fahrzeug 7 befindet sich jeweils ein fahrzeugartiges Gestell 8. Es ist durch ein zusammenfügbares Rohrsystem gebildet, wie insbesondere Fig. 3 erkennen läßt. Das fahrzeugartige Gestell 8 weist vier Räder 9 auf. Die beiden Gestelle 8 sind dabei derart seitlich am Fahrzeug 7 angeordnet, daß das Gestell 8 direkt in der Art einer Brücke oberhalb des Spargelhügels 1 fährt, wobei die Räder 9 seitlich neben dem Spargelhügel 1 laufen. Oberseitig weist das Gestell 8 noch vorne und hinten jeweils verbreiterte Führungsstangen 10 auf. Nicht dargestellt ist, daß das Gestell 8 eine insbesondere höhenverstellbare Einhängeeinrichtung für Spargelkörbe aufweist.

Die Vorrichtung funktioniert wie folgt:

Wie zuvor beschrieben, liegen die Folien 3 im Ausgangszustand direkt auf den jeweiligen Spargelhügeln 1. Für den Erntevorgang müssen die Folien 3 kurzzeitig von den Spargelhügen 1 angehoben werden. Zu diesem Zweck fährt das traktorartige Fahrzeug 7 zwischen zwei Spargelhügeln 1. Die beiden Anfänge der Folien 3 werden auf das jeweilige Gestell 8, insbesondere auf die dazugehörigen Führungsstangen 10 gelegt. Dadurch überwölben die Folien 3 die Spargelhügel 1 in der Art eines Daches 11. Unter diesem Dach 11, nämlich unter dem Gestell 8, können dann die Erntepersonen den Spargel ernten.

Das Fahrzeug 7 und damit die beiden Gestelle 8 fahren in Richtung des Pfeiles P kontinuierlich oder diskontinuierlich weiter. Dies bedeutet, daß die Folien 3 in Fahrtrichtung vorne in Richtung des Pfeiles P1 angehoben werden, während die Folien 3 in Fahrtrichtung hinten sich in Richtung des Pfeiles P2 wieder absenken. Dies bedeutet, daß das Dach 11 sich in der Art einer Welle vom einen Ende der Folie 3 zum anderen Ende hin vorwärts bewegt. Dadurch kann der Spargel über die gesamte Länge des Spargelhügels 1 geerntet werden.

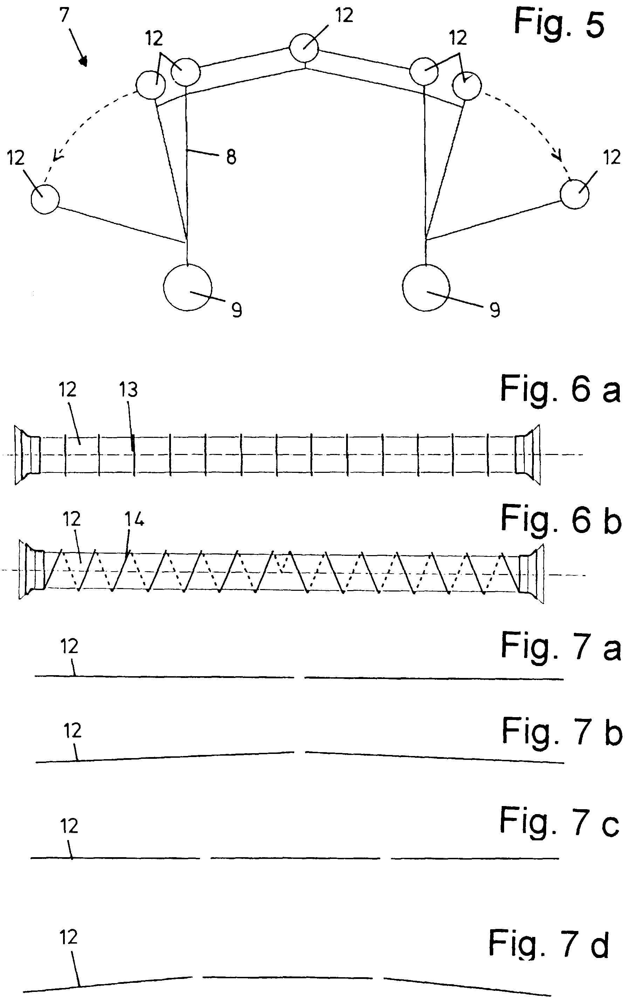

Fig. 5 zeigt eine weiterentwickelte Variante des Gestells 8. Es ist dabei nur rein schematisch das Grundprinzip dieses Gestells 8 dargestellt. Im Dachbereich weist das Gestell 8 insgesamt fünf Zylinderrollen 12 auf. Diese sind in Fig. 6 a und 6 b detaillierter dargestellt. Dabei sind die drei mittleren Zylinderrollen 12 fest angeordnet, wobei die mittlere Zylinderrolle 12 etwas höher steht als die beiden anderen. Die beiden äußeren Zylinderrollen 12 sind nach unten verschwenkbar, wie dies durch die gestrichelte Linie angedeutet ist. Dadurch wird eine bogenförmige Führung der Folie 3 gewährleistet.

Bei der Zylinderrolle 12 in Fig. 6 a ist erkennbar, daß sie über die Länge verteilt Gummiringe 13 aufweist, welche etwas über die Mantelfläche der Zylinderrollen 12 überstehen. Durch diese Gummiringe 13 wird ein besseres Abrollen der Folie 3 erreicht und ein Gleiten zwischen der Folie 3 und der Zylinderrolle 12 wird vermieden. Die Gummiringe 13 bilden durch ihren Überstand einen Zwischenraum, so daß an der Folie 3 anhaftende Steinchen und Erdpartikel hindurchlaufen können, ohne an der Folie 3 Schaden anzurichten. Endseitig sind die Zylinderrollen 12 noch mit einer Gummierung in Form eines Seitenanschlages versehen.

Die Zylinderrolle in Fig. 6 b ist mit einer Gummischnur 14 bewickelt. Dabei ist die wendelförmige Bewicklung in der einen Hälfte entgegengesetzt zur Bewicklung in der anderen Hälfte. Der Vorteil liegt darin, daß die überrollende Folie nach außen gefördert und gestreckt wird. Dadurch wird ein besseres Ablegen der Folie auf dem Spargeldamm erreicht.

Die Ringe 13 oder die Schnur 14 brauchen nicht unbedingt aus Gummi zu bestehen. Sie können auch aus jedem anderen, gleichwirkenden, elastischen Material bestehen.

Die Fig. 7 a bis 7 d zeigen, daß die Zylinderrollen 12 aus Einzel-Zylinderrollen bestehen, welche entweder gerade oder aber gewölbt angeordnet sind.

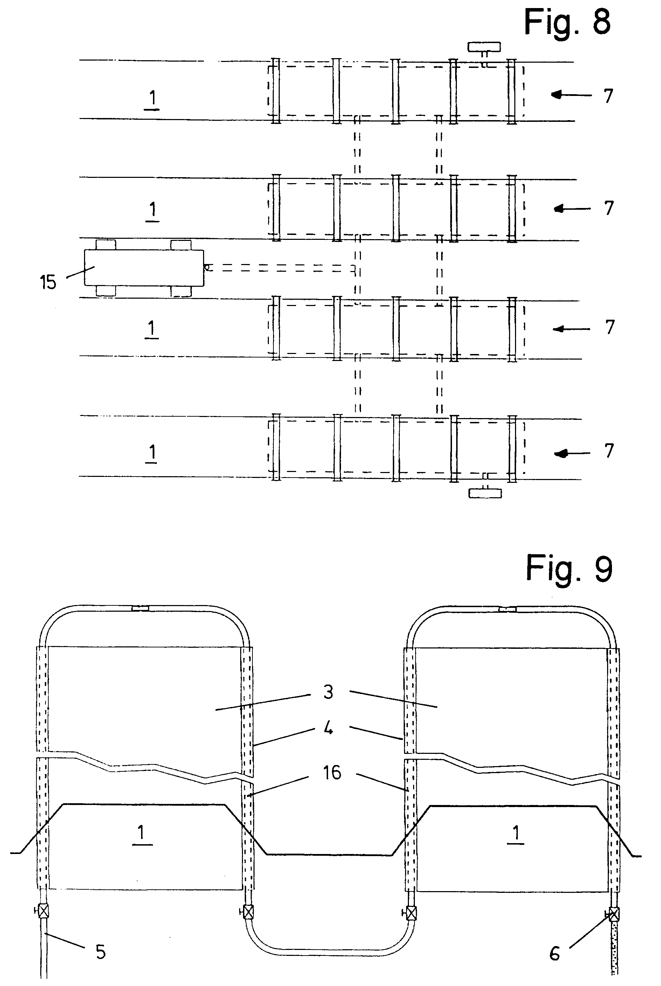

Fig. 8 zeigt ein System von insgesamt vier Gestellen 8 des Typs, wie er in Fig. 5 gezeigt ist. Diese vier Gestelle 8 sind seitlich miteinander verbunden und bilden somit insgesamt ein 4-spuriges System. Gezogen wird diese Einheit durch einen Trecker 15, welcher zwischen zwei Spargelhügeln 1 verläuft. Nur die beiden äußersten Gestelle 8 weisen dabei außen Räder auf.

Fig. 9 schließlich zeigt ein Foliensystem. Während bei der Ausführungsform der Folie 3 in Fig. 4 der Wulst 4 mit Wasser gefüllt ist, sind bei dieser Variante in die Wülste 4 ein Schlauch 16 eingezogen, wobei die den einzelnen Wülsten 4 zugeordneten Schläuche 16 untereinander verbunden sind. Dies bedeutet, daß dieses Schlauchsystem 16 über einen entsprechenden Wasserzulauf mit Absperrschiebern und Schlauchverbindern und Verbindungsschlauchleitungen in einem Vorgang mit Wasser gefüllt werden können. Der Schlauch 16 ist dabei dünnwandig und hat eine Wandstärke von ca. 1 mm und besteht aus einem festen, jedoch dehnbaren Material. Der Schlauch 16 kann dabei entweder eingezogen oder bei der Schweißung des Wulstes 4 eingelegt werden. Die Schlauchdehnung beträgt dabei 10 bis 20%. Der Durchmesser des Schlauches 16 ist so zu wählen, daß er zum einen die notwendige Schwere mit der Wasserfüllung erreicht und zum anderen an handelsübliche Vorrichtungen angeschlossen werden kann. Der Schlauch 16 läßt sich zusammenfalten und kann auf diese Weise aufgehaspelt werden. Die Schlauchenden sind so auszustatten, daß sie durch Schlauchverbinder verbunden werden können, während die vorderen Schlauchenden mit Wasserhähnen zu bestücken sind.

### Bezugszeichenliste

- 1: Spargelhügel
- 2: Boden
- 3: Folie
- 4: Wulst
- 5: Einfüllstutzen
- 6: Auslaßventil
- 7: Fahrzeug
- 8: Gestell
- 9: Rad
- 10: Führungsstange
- 11: Dach
- 12: Zylinderrollen
- 13: Gummiring
- 14: Gummischnur
- 15: Traktor
- 16: Schlauch
- P: Fortbewegungsrichtung des Fahrzeugs bzw. Gestells
- P1: Anhebung der Folie
- P2: Absenkung der Folie

## Patentansprüche

1. Verfahren zum kurzzeitigen Entfernen einer länglichen Folie (3) für Erntezwecke in der Landwirtschaft,
wobei die Folie (3) zum Abdecken von in oder auf dem Boden (2) wachsenden landwirtschaftlichen Produkten für verbesserte Wachstumsbedingungen verwendet wird,
**dadurch gekennzeichnet,**
daß die Folie (3) derart in der Art eines Daches (11) vom Boden (2) nach oben angehoben wird, daß sich darunter eine Person zum Ernten aufhalten kann.

2. Verfahren nach dem vorhergehenden Anspruch,
dadurch gekennzeichnet,
daß die Folie (3) längs eines Teilabschnittes der Gesamtlänge der Folie (3) angehoben wird.

3. Verfahren nach Anspruch 2,
dadurch gekennzeichnet,
daß die Folie (3) in der Art einer Welle vom einen Ende der Folie (3) zum anderen Ende hin sukzessive angehoben und anschließend wieder herabgelassen wird.

4. Vorrichtung zur Durchführung des Verfahrens nach einem der Ansprüche 1 bis 3,
**gekennzeichnet durch**
ein Gestell (8), welches sich unter der Folie (3) befindet und mittels welchem die Folie (3) anhebbar ist.

5. Vorrichtung nach Anspruch 4,
dadurch gekennzeichnet,
daß das Gestell (8) ein selbst angetriebenes Fahrzeug ist, welches unter der Folie (3) hindurch in deren Längsrichtung fährt.

6. Vorrichtung nach Anspruch 4,
dadurch gekennzeichnet,
daß das Gestell (8) ein durch eine Seilwinde oder durch einen Traktor (15) gezogenes Fahrzeug ist, welches unter der Folie (3) hindurch in deren Längsrichtung fährt.

7. Vorrichtung nach Anspruch 6,
dadurch gekennzeichnet,
daß mehrere Gestell-Fahrzeuge (8) zu einer mehrspurigen Einheit miteinander verbindbar sind, wobei diese Einheit als solche insgesamt gezogen wird.

8. Vorrichtung nach Anspruch 6 oder 7,
dadurch gekennzeichnet,
daß der Traktor (15) eine Einrichtung zum Anheben des Gestells (8) bzw. der Einheit aus mehreren Gestell-Fahrzeugen (8) aufweist.

9. Vorrichtung nach Anspruch 4,
dadurch gekennzeichnet,
daß das Gestell (8) seitlich auskragend an einem selbst angetriebenen Fahrzeug (7) angeordnet ist.

10. Vorrichtung nach einem der Ansprüche 4 bis 9,
dadurch gekennzeichnet,
daß das Gestell an seiner Oberseite hintereinander wenigstens zwei, quer zur Längsrichtung sich erstreckende Zylinderrollen (12) aufweist.

11. Vorrichtung nach Anspruch 10,
dadurch gekennzeichnet,
daß die vorderste sowie hinterste Zylinderrolle (12) vom Gestell (8) weg nach unten verschwenkbar sind.

12. Vorrichtung nach Anspruch 10 oder 11,
dadurch gekennzeichnet,
daß die Zylinderrolle (12) über die Länge verteilte Ringe (13) oder eine hälftig entgegengesetzt wendelförmig aufgewickelte Schnur (14) aus einem elastischen Material, insbesondere Gummi aufweist.

13. Vorrichtung nach einem der Ansprüche 10 bis 12,
dadurch gekennzeichnet,
daß die Zylinderrollen (12) aus mehreren Einzel-Zylinderrollen bestehen, welche geradlinig oder gewölbt verlaufen.

14. Vorrichtung nach einem der Ansprüche 4 bis 13,
dadurch gekennzeichnet,
daß für das Geste (8) eine am Gestell (8) anbringbare Zusatzeinrichtung zur Aufnahme einer Folienrolle vorgesehen ist.

15. Folie (3) zur Durchführung des Verfahrens nach einem der Ansprüche 1 bis 3,
**dadurch gekennzeichnet**,
daß die Folie (3) an den beiden Längsrändern einen Schlauch (4) für eine Wasserbefüllung als Folienbeschwerung aufweist.

16. Folie nach Anspruch 15,
dadurch gekennzeichnet,
daß der Schlauch (16) in einem Wulst (4) der Folie (3) angeordnet ist.

17. Folie nach Anspruch 15 oder 16,
dadurch gekennzeichnet,
daß die Schläuche (16) mehrerer Folien (3) zu einem Schlauchsystem miteinander verbindbar sind.
